**Europäisches Patentamt**

**European Patent Office**

**Office européen des brevets**

(11) Veröffentlichungsnummer: **0 218 046**
**B1**

(12) **EUROPÄISCHE PATENTSCHRIFT**

(45) Veröffentlichungstag der Patentschrift:
**11.07.90**

(21) Anmeldenummer: **86111087.2**

(22) Anmeldetag: **11.08.86**

(51) Int. Cl.⁵: **H04L 5/16, G08G 1/09,
H04L 5/14**

(54) Anordnung für ein Verkehrsleit- und Informationssystem.

(30) Priorität: **14.08.85 DE 3529166**

(43) Veröffentlichungstag der Anmeldung:
**15.04.87 Patentblatt 87/16**

(45) Bekanntmachung des Hinweises auf die Patenterteilung:
**11.07.90 Patentblatt 90/28**

(84) Benannte Vertragsstaaten:
**AT BE CH DE FR GB LI NL**

(56) Entgegenhaltungen:
**DE-C- 3 304 451
FR-A- 2 244 315
FR-A- 2 436 537
US-A- 3 967 058
US-A- 4 388 716**

(73) Patentinhaber: **Siemens Aktiengesellschaft,
Wittelsbacherplatz 2, D-8000 München 2(DE)**

(72) Erfinder: **Kappeller, Reinhard, Dipl.-Ing. (FH),
Geigenbergerstrasse 27, D-8000 München 71(DE)**

## Beschreibung

Die Erfindung bezieht sich auf eine Anordnung für ein Verkehrsleit- und Informationssystem zur drahtgebundenen bidirektionalen Informationsübertragung in Form von Datenblöcken zwischen einer Hauptstation, die von einem Bakensteuergerät gebildet ist, und mehreren Unterstationen mit jeweils einem Bakensender und -empfänger, welche die Informationen mittels elektromagnetischer Wellen an ortsveränderliche Empfänger-/Sendereinheiten von Fahrzeuggeräten senden und von diesen empfangen, wobei der Dialogverkehr zwischen der Hauptstation und den Unterstationen entweder abwechselnd nacheinander oder gleichzeitig erfolgt.

Ein Verkehrsleit- und Informationssystem für den individuellen Straßenverkehr ist beispielsweise aus den deutschen Offenlegungsschriften 29 23 634 und 29 36 062 bekannt. Ein derartiges Verkehrsleit- und Informationssystem (z.B. "AUTO-SCOUT") erfordert eine entsprechende Infrastruktur, die mit möglichst geringem Aufwand geschaffen werden soll. So können beispielsweise vorhandene Verkehrsrechner für eine verkehrsabhängige Lichtsignalanlagensteuerung mit herangezogen werden. Die Sender und Empfänger der Baken können unmittelbar an den Lichtsignalgebern montiert sein. Für ein obengenanntes Verkehrsleitsystem müssen zwischen der oder den ortsfesten Baken und den ortsveränderlichen Fahrzeuggeräten der Kraftfahrzeuge in relativ kurzer Zeit große Datenmengen für den Informationsaustausch zuverlässig übertragen werden. Ein Verfahren und eine Einrichtung hierfür ist beispielsweise in der DE-OS 3 304 451 beschrieben. Für die Informationsübertragung mit hohen Datenraten sind eigene Übertragungsleitungen zwischen einem Bakensteuergerät, das mit einem übergeordneten Leitrechner verbunden ist, und den einzelnen Bakensendern und -empfängern, z.B. an einer Straßenkreuzung erforderlich. Hierfür ist die Verlegung von geschirmten Spezialkabeln notwendig. Dies ist jedoch aufwendig und sehr kostenintensiv, insbesondere im Kreuzungsbereich. Um eine Neuverlegung von Kabeln zu vermeiden, sollen bereits verlegte, im allgemeinen ungeschirmte Erdkabel für das Verkehrsleitsystem mit benützt werden können. Dabei stehen im allgemeinen nur wenig freie Adern eines Erdkabels zur Verfügung, das beispielsweise zwischen einem Signalanlagen-Steuergerät und den einzelnen Lichtsignalgebern verlegt ist.

Der Erfindung liegt daher die Aufgabe zugrunde, für ein eingangs genanntes Verkehrsleit- und Informationssystem eine Anordnung anzugeben, die es gestattet, über bereits installierte Leitungen mit einer möglichst geringen Anzahl von Leitungsadern Informationsdaten zwischen einem Bakensteuergerät und mehreren Bakensendern und -empfängern zu übertragen.

Diese Aufgabe wird erfindungsgemäß dadurch gelöst, daß in der Hauptstation eine Sende- und eine Empfangseinrichtung, die an einem an eine Übertragungsleitung angeschalteten Übertrager angeschlossen sind, eine Steuereinrichtung, die einerseits mit der Sende- und Empfangseinrichtung und andererseits mit einem Leitrechner verbunden ist, und eine Stromfernversorgungseinrichtung für die Unterstationen vorgesehen sind, daß die Hauptstation mit mehreren Unterstationen über jeweils eine Übertragungsleitung mit einer geringen Anzahl von Leitungsadern verbunden ist, die sowohl der Informationsübertragung als auch der Stromfernversorgung dienen, daß jede Unterstation eine Stromversorgungseinrichtung und einen Übertrager aufweist, die an der Übertragungsleitung angeschlossen sind, daß dem Übertrager der Unterstation eine Empfangseinrichtung nachgeschaltet ist, deren Ausgang mit einer Steuereinrichtung der Unterstation und dem Bakensender verbunden ist, und daß die Unterstation einen von den Bakenempfänger beaufschlagte Sendeeinrichtung aufweist, die mit dem Übertrager verbunden ist, wobei die Steuereinrichtung der Unterstation die Empfangs- und die Sendeeinrichtung in Abhängigkeit von den Sendesignalen der Hauptstation steuert.

Aus der FR-A 2 436 537 ist es bekannt, daß die Unterstation die Empfangs- und die Sendeeinrichtung in Abhängigkeit von den Sendesignalen der Hauptstation steuert.

Für den Dialogverkehr zwischen der Hauptstation und mehreren Unterstationen weist das Übertragungssystem erfindungsgemäß in der Hauptstation (Bakensteuergerät) sowohl eine Sende- als auch eine Empfangseinrichtung auf, die beide über eine Übertragungsleitung mit jeweils einer Unterstation verbunden sind. Diese weist ebenfalls eine Empfangs- und eine Sendeeinrichtung auf, die über einen Übertrager an der Übertragungsleitung angeschlossen sind und die ihrerseits auf den Bakensender bzw. -empfänger führen. Sowohl in der Hauptstation als auch in der jeweiligen Unterstation ist jeweils ein Steuergerät vorgesehen, um den Dialogverkehr je nach der Übertragungsart, nämlich abwechselnd nacheinander oder gleichzeitig, zu steuern. Dabei ist das Steuergerät der Unterstation so ausgestaltet, daß es in Abhängigkeit von den empfangenen Sendesignalen der Sendeeinrichtung der Hauptstation die Empfangs- und Sendeeinrichtung der Unterstation steuert.

Zweckmäßigerweise weist die Übertragungsleitung nur drei Leitungsadern auf, die sowohl für den Informationsaustausch als auch für die Stromfernübertragung von der Hauptstation zu den Unterstationen genutzt wird. Dabei kann die eine der drei Adern, an der das Nullpotential der Stromversorgungseinrichtung liegt, auf Erdpotential liegen, so daß im Grunde genommen lediglich zwei freie Adern für den Informationsaustausch für das Verkehrsleit- und Informationssystem ausreichend sind.

Bei einem abwechselnden Dialogverkehr, d.h. das Bakensteuergerät (Hauptstation) sendet die Informationsdaten und schaltet dann auf Empfang, während dieser Zeit werden die von den Unterstationen gesendeten Daten in der Hauptstation empfangen, werden die Informationsdaten in Datenblöcken in HDLC-Protokollen (High Level Data Link Control) übertragen. Bei der Übertragung der Datenblöcke in Form von HDLC-Protokollen wird die Betriebsart NRZI (Never Return to Zero Invert) verwendet. Für diese Übertragungsart ist es kenn-

zeichnend, daß nach spätestens sechs Sendetakten ein Signalwechsel erfolgt. Das Ende eines Datenblocks kann somit frühestens nach sieben Sendetakten erkannt werden.

In einer zweckmäßigen Ausgestaltung der Erfindung ist daher in jeder Unterstation die Steuereinrichtung mit einem retriggerbaren Verzögerungsglied mit einer bestimmten Verzögerungszeit vorgesehen, die gleich oder größer ist als die Zeit von sieben Sendetakten. Dem ersten Verzögerungsglied ist ein zweites Verzögerungsglied nachgeschaltet, das entsprechend seiner Verzögerungszeit die Empfangseinrichtung der Unterstation sperrt und die Sendeeinrichtung der Unterstation freigibt. Auf diese Weise ist eine wechselseitige Umschaltung von Senden auf Empfangen sichergestellt.

In einer weiteren Ausgestaltung der erfindungsgemäßen Anordnung für den Dialogverkehr, der gleichzeitig stattfindet, ist die Steuereinrichtung der Unterstation entsprechend ausgebildet. Die Hauptstation sendet dabei mit einem vorgegebenen Impulsraster ständig, zwischen den einzelnen Sendeimpulsen ist sie auf Empfang geschaltet, während dieser Zeit sendet die Unterstation. Dazu weist zweckmäßigerweise jede Unterstation in der Steuereinrichtung eine astabile Kippstufe und eine Datenblockende-Erkennungseinrichtung auf, die über ein logisches Verknüpfungsglied die Sendeeinrichtung der Unterstation steuern. Auf diese Weise wird in der Unterstation von den empfangenen Sendesignalen der Hauptstation das Sendesignal für die Unterstation abgeleitet, wobei die Unterstation zeitverzögert bzw. phasenverschoben zwischen den Sendeimpulsen der Hauptstation sendet.

Anhand der Zeichnung wird die erfindungsgemäße Anordnung im einzelnen erläutert.

Dabei zeigen

Fig. 1 eine mögliche Anordnung der Hauptstation im Blockschaltbild,

Fig. 2 eine mögliche Anordnung der Unterstation in Blockschaltbild,

Fig. 3 ein Zeitdiagramm für abwechselnden Dialogverkehr,

Fig. 4 ein Schaltbeispiel für die Steuereinrichtung der Unterstation,

Fig. 5 ein Zeitdiagramm für gleichzeitigen Dialogverkehr,

Fig. 6 ein Schaltbeispiel der Steuereinrichtung der Unterstation und

Fig. 7 Pegeldiagramme der Sende- bzw. Empfangssignale.

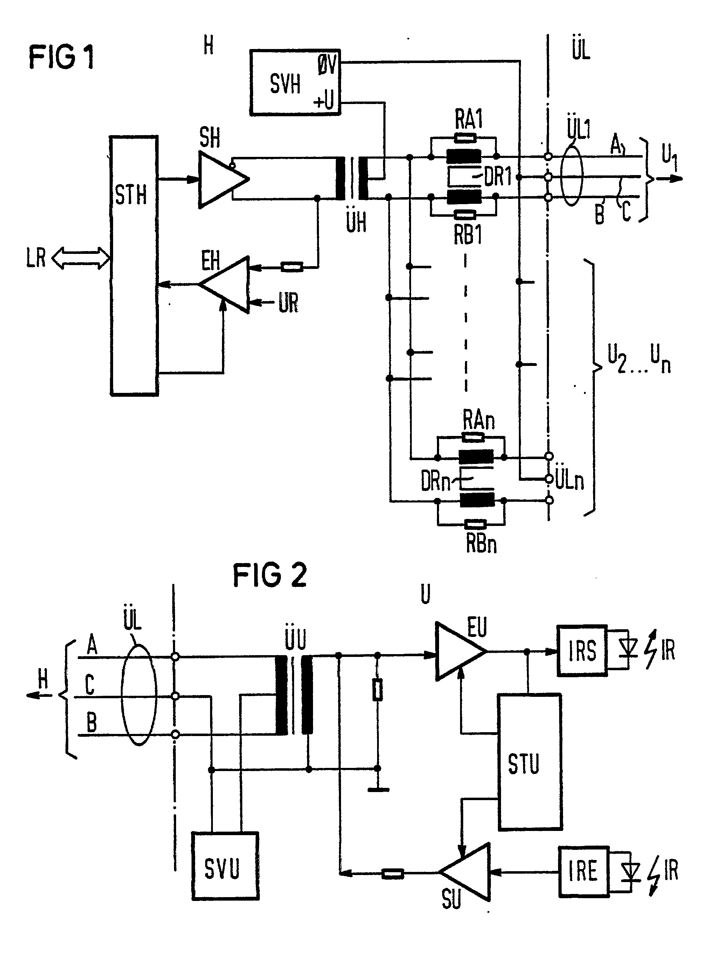

In Fig. 1 und 2 ist die erfindungsgemäße Anordnung im Blockschaltbild dargestellt. Fig. 1 zeigt die Hauptstation H, ein Bakensteuergerät. Die Hauptstation H weist eine Steuereinrichtung STH auf, die mit einem übergeordneten Leitrechner LR verbunden ist. Der Steuereinrichtung STH ist eine Sendeeinrichtung SH und eine Empfangseinrichtung EH nachgeordnet. Der Ausgang der Sendeeinrichtung SH der Hauptstation führt zu einem Übertrager ÜH. Sekundärseitig sind am Übertrager ÜH über zwei Anpassungswiderstände RA1 und RB1 die beiden Adern A und B der Übertragungsleitung ÜL verbunden, die jeweils zu einer Unterstation U1 bis Un führen. Zu den Anpassungswiderständen RA und RB parallel sind jeweils Drosseln DR1 geschaltet. Für die Datenübertragung ÜL1 ist der induktive Widerstand dieser Drosseln DR1, die jeweils für eine Übertragungsleitung zur jeweiligen Unterstation vorgesehen sind, groß gegenüber den dazu parallel liegenden Anpassungswiderständen RA, RB. Für die Fernstromversorgung der Unterstationen U1 bis Un ist eine Stromversorgungseinrichtung SVH in der Hauptstation angeordnet, die mit dem Nullpotential zur jeweiligen C-Ader der Übertragungsleitung führt. Der spannungsführende Ausgang der Stromversorgungseinrichtung SVH, mit +U bezeichnet, ist an die Mittelanzapfung der Sekundärwicklung des Übertragers ÜH geführt. Die Empfangseinrichtung EH der Hauptstation ist an der Primärwicklung des Übertragers ÜH angeschlossen. Der Ausgang der Empfangseinrichtung EH führt zur Steuereinrichtung STH. Diese steuert über eine Steuerleitung die Empfangseinrichtung EH der Hauptstation. Für jede Übertragungsleitung ÜL1 bis ÜLn ist ein Drosselpaar DR1 bis DRn vorgesehen. Dazu parallel liegen die Anpassungswiderstände RA1 bis RAn und RB bis RBn. Die vom Leitrechner kommenden Informationsdaten werden in der Hauptstation H über die Steuereinrichtung STH über die Sendeeinrichtung SH an die einzelnen Unterstationen U1 bis Un übertragen. Die von den Unterstationen U1 bis Un gesendeten Informationen werden über die Empfangseinrichtung EH der Hauptstation und der Steuereinrichtung STH der Hauptstation an den Leitrechner LR übertragen. Je nach gewähltem Übertragungsverfahren für den Informationsaustausch, entweder gleichzeitige Übertragung, also ständiges Senden und Empfangen in den einzelnen Sendelücken oder abwechselndes Senden und Empfangen, d.h. Umschalten von Senden auf Empfangen, werden von der Steuereinrichtung STH der Hauptstation die Sende- und Empfangseinrichtung der Hauptstation (SH und EH) gesteuert. In der Unterstation U gemäß Fig.2 (Blockschaltbild) werden die von der Hauptstation H über die Übertragungsleitung ÜL empfangenen Daten verarbeitet und an den eigentlichen Bakensender gegeben oder vom Bakensender empfangenen Daten zur Hauptstation übertragen.

In Fig. 2 ist die Unterstation U1 im Blockschaltbild gezeigt. Von der Hauptstation H gelangen die Daten über die Übertragungsleitung ÜL, die hier drei Adern A,B,C aufweist, an die Unterstation U. Dabei führen die Adern A und B auf die Primärwicklung des Übertragers ÜU der Unterstation. Die Ader C führt zur Stromversorgungseinrichtung SVU der Unterstation, ebenso führt von der Mittelanzapfung der Primärwicklung des Übertragers ÜU eine Leitung zur Stromversorgungseinrichtung SVU der Unterstation. Vom Übertrager Ün gelangen über die Sekundärwicklung die Daten von der Hauptstation H zur Empfangseinrichtung EU der Unterstation U und von da einerseits an die Steuereinrichtung STU der Unterstation und andererseits an die Sendeeinheit des Bakensenders. In diesem Beispiel ist der Bakensender als Infrarotsender IRS dargestellt, der über Infrarotlicht IR die Informationsdaten an die ortsveränderlichen Kraftfahrzeuge sendet. Von dort aus erhält auch der Bakenempfänger über die Infrarotstrahlung IR und der Infrarotempfangseinrichtung IRE die Empfangsdaten, die in der Unterstation U1 an die Sendeeinrichtung SU der Unterstation gelangen und von dort über den Übertrager ÜU und der Übertragungsleitung ÜL an die Hauptstation H gelangen. Dabei wird von der Steuereinrichtung STU sowohl die Empfangseinrichtung EU als auch die Sendeeinrichtung SU der Unterstation U gesteuert, wie oben beschrieben und an weiteren Ausführungsbeispielen noch näher erläutert wird.

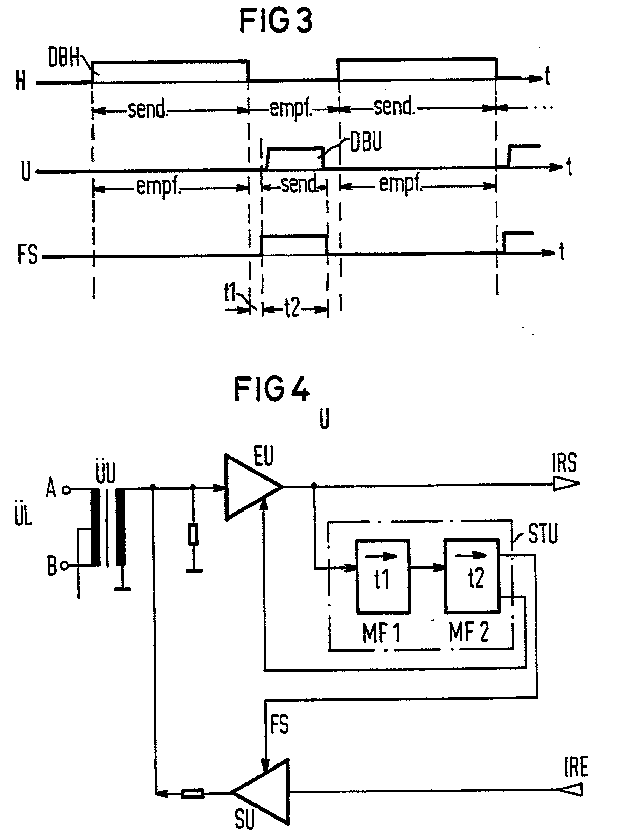

Zunächst ist an der Figur 3, die ein Zeitdiagramm für einen abwechselnden Dialogverkehr darstellt, das Übertragungsverfahren für die Informationsdaten erläutert. Die Hauptstation H sendet Datenblöcke DBH aus, schaltet nach Aussenden eines Datenblocks DBH auf Empfang, während dieser Zeit sendet die Unterstation U ihrerseits ihren Datenblock DBH an die Hauptstation H. Danach ist die Unterstation U wieder empfangsbereit für den Datenblock DBH der Hauptstation H. Dies ist in den beiden ersten Diagrammen veranschaulicht. Darunter ist ein Zeitdiagramm entsprechend dargestellt für das Freigabesignal FS, das die Sendeeinrichtung (SU) der Unterstation U bei diesem Übertragungsverfahren, nämlich das abwechselnde Senden und Empfangen steuert. Dafür ist die Steuereinrichtung der Unterstation entsprechend ausgebildet, wie dies in Fig.4 veranschaulicht ist.

In Fig.4 ist im Blockschaltbild die Unterstation U dargestellt, die über den Übertrager ÜU an der Übertragungsleitung ÜL angeschlossen ist. Vom Übertrager ÜU führen die Empfangssignale zur Empfangseinrichtung EU der Unterstation U und von da zur Steuereinrichtung STU und gleichzeitig zum Infrarotsender IRS. Die empfangenen Signale von der Infrarotempfangseinrichtung IRE gelangen zu der Sendeeinrichtung SU der Unterstation und von da zum Übertrager ÜU und dann auf die Übertragungsleitung ÜL. Die Sendeeinrichtung SU wird von der Steuereinrichtung STU mit dem Freigabesignal FS beaufschlagt. Wie anhand der Fig. 3 schon erwähnt, werden die Sendeinformationen der Hauptstation in einzelne Datenblöcke DBH gegliedert. Zwischen diesen gesendeten Datenblöcke ist die Hauptstation auf Empfang geschaltet, so daß in diesen Lücken die Unterstationen ihre Rückmeldungen DBU senden können. Die Übertragung der Datenblöcke erfolgt dabei in Form von HDLC (High Level Data Link Control)-Protokollen, wobei die Betriebsart NRZI (Never Return to Zero Invert) vorgesehen ist. Ein wesentliches Kennzeichen ist dabei, daß der Inhalt der Datenblöcke durch Einfügen oder Weglassen von Null-Bits codetransparent gemacht wird, und daß nach spätestens sechs Sendetakten ein Signalwechsel erfolgt. Das Ende eines Datenblocks DB kann somit frühestens nach sieben Sendetakten erkannt werden. Für dieses Übertragungsverfahren ist die Steuereinrichtung STU der Unterstation U entsprechend ausgebildet. Sie weist daher ein erstes Verzögerungsglied, beispielsweise ein retriggerbares Monoflop MF1 mit einer Verzögerungszeit von t1 auf, das während die Hauptstation (H) sendet fortlaufend nachgetriggert wird. Da das Ende eines Datenblocks DB frühestens nach sieben Sendetakten erkannt werden kann, wird die Verzögerungszeit t1 des Monoflops MF1 gleich oder größer als sieben Sendetakte gewählt.

Der Ausgang des Monoflops MF1 triggert ein zweites Verzögerungsglied, das Monoflop MF2, mit einer Verzögerungszeit von t2. Während dieser Verzögerungszeit t2 des zweiten Monoflops MF2 wird die Empfangseinrichtung EU der Unterstation U gesperrt und die Sendeeinrichtung SU der Unterstation U freigegeben (Freigebesignal FS). Eine mögliche Rückmeldung von der Unterstation U zur Hauptstation H kann somit während der Verzögerungszeit t2 des zweiten Monoflops MF2 erfolgen, wie dies im Zeitdiagramm der Fig.3 dargestellt ist. Die dort eingetragenen Zeiten t1 und t2 entsprechen den Verzögerungszeiten des ersten und des zweiten Monoflops MF1 und MF2 der Fig.4.

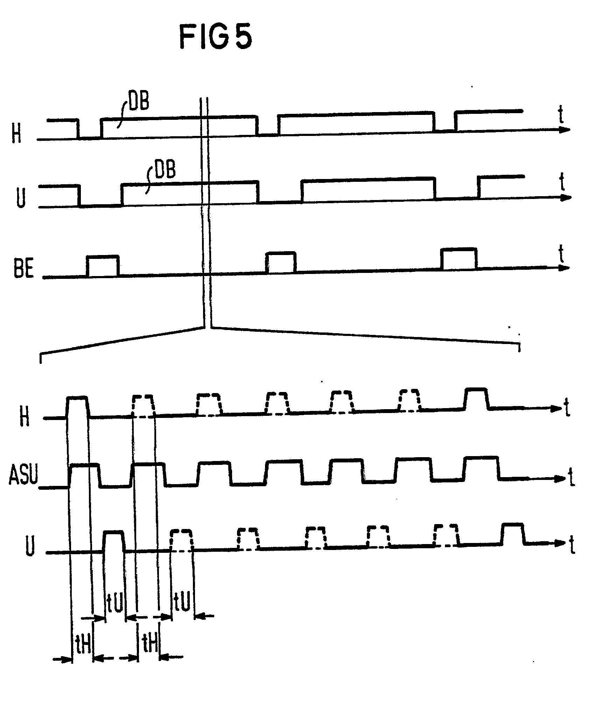

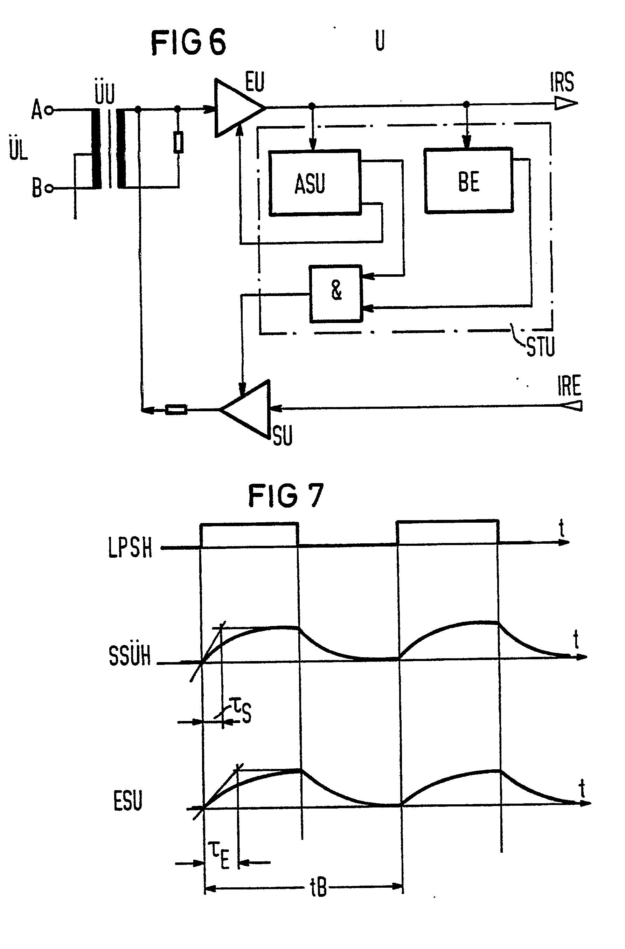

In Fig.5 sind Zeitdiagramm für die gleichzeitige Informationsübertragung dargestellt. Das erste Diagramm zeigt die von der Hauptstation H gesendeten Datenblöcke, die beispielsweise in einem Impuls-Pausen-Verhältnis von 1 : 3 gesendet werden. Bei diesem Übertragungsverfahren sendet die Hauptstation H zu den Unterstationen ständig und die Rückmeldung von den Unterstationen U zur Hauptstation erfolgt in den Impulspausen. Unter dem Zeitdiagramm der Sendesignale der Hauptstation H und der Sendesignale der Unterstation U ist die Signalerkennung für das Erkennen eines Blockende BE dargestellt. Darunter ist ein Zeitdiagramm gezeigt, das einen Ausschnitt aus den Sendesignalen der Hauptstation und der Unterstation zeigt. Um in den Impulspausen der ständig sendenden Hauptstation Sendesignale von der Unterstation der Hauptstation übertragen zu können, muß jede Unterstation aus den empfangenen Sendesignalen der Hauptstation seine Sendesignale mit einer entsprechenden Steuereinrichtung, wie sie in Fig.6 beispielhaft gezeigt ist, ableiten. Dabei sendet die Unterstation zeitverzögert bzw. phasenverschoben zwischen den Sendeimpulsen der Hauptstation, wie dies aus den Zeitdiagrammen der Fig. 5, untere Hälfte ersichtlich ist. Das mit ASU bezeichnete Zeitdiagramm zeigt die Signale, die die astabile Kippstufe in der Unterstation U (Fig.6) aus den Sendesignalen der Hauptstation H für die Steuerung der Sendeeinrichtung der Unterstation ableitet. Dabei ist tH der Zeitbereich möglicher Sendeimpulse der Hauptstation. tU ist der Zeitbereich möglicher Sendeimpulse der Unterstation. Hier ist also gezeigt, daß das Sendesignal der Hauptstation aus Impulsen vorzugsweise mit einem Impuls-Pausen-Verhältnis von 1 : 3 besteht. Das Sendesignal der Unterstationen wird vom Sendesignal der Hauptstation synchronisiert und liegt zeitverzögert bzw. phasenverschoben zwischen zwei möglichen Sendeimpulsen der Hauptstation. Dabei kann sich die Sendeinformation der Hauptstation ebenfalls in einzelne Datenblöcke gliedern, die sich jedoch auch lückenlos aneinanderreihen können. Die Steuereinrichtung der Hauptstation wechselt laufend zwischen der Betriebsart Senden und Empfangen, wobei die Sendeeinrichtung der Hauptstation immer eingeschaltet bleibt, der Empfänger der Hauptstation jedoch nur im Bereich möglicher Sendeimpulse seitens der Unterstation betriebsbereit geschaltet wird. Für dieses Informations-Übertragungsverfahren ist die Steuereinrichtung entsprechend ausgebildet, wie dies in Fig.6 dargestellt ist.

In Fig.6 ist ein für dieses Verfahren mögliche Steuereinrichtung STU der Unterstation U im Blockschaltbild dargestellt. Über den Übertrager ÜU der Unterstation ist die Unterstation U an der Übertragungsleitung ÜL angeschlossen. Über die Empfangseinrichtung EU der Unterstation gelangen die Empfangsdaten einerseits an eine astabile Kippstufe ASU und eine Blockende-Erkennungseinrichtung BE und andererseits an den Infrarotsender IRS.

Die vom Infrarotempfänger IRE empfangenen Daten gelangen an die Sendeeinrichtung SU der Unterstation und von da über den Übertrager ÜU und die Übertragungsleitung ÜL zur Hauptstation. Die Steuereinrichtung STU der Unterstation U steuert entsprechend den oben erläuterten Übertragungsverfahren die Empfangs- und Sendeeinrichtung EU und SU der Unterstation U. Die einzelnen Sendeimpulse der Hauptstation synchronisieren die astabile Kippstufe ASU. Die Blockende-Erkennungseinrichtung BE gibt über das UND-Glied, das gleichzeitig auch von der astabilen Kippstufe ASU beaufschlagt ist, die Sendeeinrichtung SU der Unterstation zum Senden frei. In dieser Zeit ist die Empfangseinrichtung EU der Unterstation gesperrt. Danach wird die Empfangseinrichtung EU der Unterstation wieder freigegeben, während des Empfangs der Informationsdaten von der Hauptstation ist die Sendeeinrichtung SU der Unterstation gesperrt ist.

In Fig. 7 sind die Signalformen der Sendeimpulse der Hauptstation und der Empfangssignale der Unterstation dargestellt. LPSH zeigt den Logikpegel des Sendesignals vor der Sendeeinrichtung SH der Hauptstation. Dabei ist die kürzestes Bitfolgezeit mit tB bezeichnet. Um ein Überkoppeln zwischen den einzelnen Adern der Übertragungsleitung zu vermeiden, werden die Anstiegs- und Abfallflanken verschliffen. Dabei weisen die Anstiegs- und Abfallzeiten des Sendesignals eine Zeitkonstante S auf. Dies ist im zweiten Diagramm gezeigt, das mit SSÜH bezeichnet ist und die Sendesignale am Übertrager ÜH der Hauptstation zeigt. Dabei entspricht die Zeitkonstante $\tau_S = 0,1 \cdot tB$, wobei tB die kürzeste Bitfolgezeit ist. Die Zeitkonstante $\tau_E$ der Empfangssignale der Unterstation ergibt sich in Verbindung mit der über einen längeren Zeitraum gegebenenfalls stark schwankenden Leitungskapazität der Übertragungsleitung, wobei $\tau_{E\ max} \approx 0,6 \cdot tB$ einen störungsfreien Empfang in der Unterstation gewährleistet. Die Empfangssignale der Unterstation sind ebenfalls im Diagramm dargestellt und mit ESU bezeichnet, wie sie am Eingang der Empfangseinrichtung EU der Unterstation auftreten.

Entsprechendes gilt auch für die Zeitkonstanten der Sendesignale der Unterstation und der Empfangssignale der Hauptstation.

Bezugszeichenliste

H Hauptstation
U Unterstation
STH Steuereinrichtung der H
STU Steuereinrichtung der U
SH Sendeeinrichtung der H
SU Sendeeinrichtung der U
EH Empfangseinrichtung der H
EU Empfangseinrichtung der U
ÜH Übertrager der H
ÜU Übertrager der U
RA, RB Anpassungs-Widerstände
A,B,C Adern der ÜL
ÜL Übertragungsleitung
U1,U2,... Un Unterstationen
DR Drossel
SVH Stromversorgungseinrichtung der H
SVU Stromversorgungseinrichtung der U
IRS Infrarotsender
IR Infrarotlicht
DB Datenblock
DBH Datenblöcke der H
DBU Datenblöcke der U
FS Freigabesignal
MF Mono-Flop
t Verzögerungszeit
tH Zeitbereich
tB Bitfolgezeit
BE Blockende
ASU astabile Kippstufe
$\tau_S$ Zeitkonstante

Patentansprüche

1. Anordnung für ein Verkehrsleit- und Informationssystem zur drahtgebundenen bidirektionalen Informationsübertragung in Form von Datenblöcken zwischen einer Hauptstation, die von einem Bakensteuergerät gebildet ist, und mehreren Unterstationen mit jeweils einem Bakensender und -empfänger, welche die Informationen mittels elektromagnetischer Wellen an ortsveränderliche Empfänger-/Sendereinheiten von Fahrzeuggeräten senden und von diesem empfangen, wobei der Dialogverkehr zwischen der Hauptstation und der Unterstation entweder abwechselnd nacheinander oder gleichzeitig erfolgt,
**dadurch gekennzeichnet,** daß in jeder Hauptstation (H) eine Sende- und eine Empfangseinrichtung (SH, EH), die an einem an einer Übertragungsleitung (ÜL) angeschalteten Übertrager (ÜH) angeschlossen sind, eine Steuereinrichtung (STH), die einerseits mit der Sende-und Empfangseinrichtung (SH, EH) und andererseits mit einem Leitrechner (LR) verbunden ist, und eine Stromfernversorgungseinrichtung (SVH) für die Unterstationen (U1 bis Un) vorgesehen sind,
daß die Hauptstation (H) mit mehreren Unterstationen (U1 bis Un) über jeweils eine Übertragungsleitung (ÜL1 bis ÜLn) mit einer geringen Anzahl von Leitungsadern verbunden ist, die sowohl der Informationsübertragung als auch der Stromfernversorgung dienen,

daß jede Unterstation (U1 bis Un) eine Stromversorgungseinrichtung (SVU) und einen Übertrager (ÜU) aufweist, die an der Übertragungsleitung (ÜL) angeschlossen sind, daß dem Übertrager (ÜU) der Unterstation (U) eine Empfangseinrichtung (EU) nachgeschaltet ist, deren Ausgang mit einer Steuereinrichtung (STU) der Unterstation (U) und dem Bakensender (IRS) verbunden ist,
und daß die Unterstation (U) eine von den Bakenempfängern (IRE) beaufschlagte Sendeeinrichtung (SU) aufweist, die mit dem Übertrager (ÜU) verbunden ist, wobei die Steuereinrichtung (STU) der Unterstation (U) die Empfangs- und die Sendeeinrichtung (EU, SU) in Abhängigkeit von den normalen Sendesignalen der Hauptstation steuert.

2. Anordnung nach Anspruch 1,
**dadurch gekennzeichnet**, daß die Übertragungsleitung (ÜL) drei Leitungsadern (A,B,C) aufweist.

3. Anordnung nach Anspruch 1 oder 2,
**dadurch gekennzeichnet**, daß bei abwechselndem Dialogverkehr die Datenblöcke in HDLC-Protokollen mit der NRZI-Betriebsart übertragen werden, wobei nach sechs Sendetakten ein Signalwechsel erfolgt und von Senden auf Empfangen umgeschaltet wird,
daß hierfür jede Unterstation (U) in der Steuereinrichtung (STU) ein retriggerbares Verzögerungsglied (MF1) mit einer Verzögerungszeit (t1) aufweist, die gleich oder größer ist als die Zeit von sieben Sendetakten, und daß dem retriggerbaren Verzögerungsglied (MF1) ein zweites Verzögerungsglied (MF2) nachgeschaltet ist, das entsprechend seiner Verzögerungszeit (t2) die Empfangseinrichtung (EU) der Unterstation (U) sperrt und die Sendeeinrichtung (SU) der Unterstation (U) freigibt.

4. Anordnung nach Anspruch 1 oder 2,
**dadurch gekennzeichnet**, daß bei gleichzeitigem Dialogverkehr die Hauptstation (H) in einem bestimmten Impuls-Pausen-Verhältnis sendet, wobei zwischen den Sendeimpulsen auf Empfang geschaltet wird, daß jede Unterstation (U) ihre Sendesignale vom Sendesignal der Hauptstation (H) ableitet, wobei die Unterstation (U) zeitverzögert bzw. phasenverschoben zwischen den Sendeimpulsen der Hauptstation sendet, und daß hierfür jede Unterstation (U) in der Steuereinrichtung (STU) eine astabile Kippstufe (ASU) und eine Datenblockende-Erkennungseinrichtung (BE) aufweist, die über ein logisches Verknüpfungsglied die Sendeeinrichtung (SU) der Unterstation (U) steuern.

## Claims

1. Arrangement for a traffic guidance and information system for the wire-line bidirectional transmission of information in the form of data blocks between a main station, which is formed by a beacon controller, and a plurality of substations having in each case one beacon transmitter and receiver, which transmit the information to and receive information from mobile transmitting/receiving units of vehicle devices by means of electromagnetic waves, the dialog traffic between the main station and the substation being carried out either successively in alternation or simultaneously, characterized in that there are provided in each main station (H) a transmitting and a receiving device (SH, EH) which are connected to a transformer (ÜH) switched into a transmission line (ÜL), a control device (STH) which is connected on the one hand to the transmitting and receiving device (SH, EH) and on the other hand to a master computer (LR), and a remote power supply device (SVH) for the substations (U1 to Un), in that the main station (H) is connected to a plurality of substations (U1 to Un) via in each case one transmission line (ÜL1 to ÜLn) having a small number of line wires which serve both for the information transmission and for the remote power supply, in that each substation (U1 to Un) has a power supply device (SVU) and a transformer (ÜU) which are connected to the transmission line (ÜL), in that connected downstream of the transformer (ÜU) of the substation (U) is a receiving device (EU), the output of which is connected to a control device (STU) of the substation (U) and to the beacon transmitter (IRS), and in that the substation (U) has a transmitting device (SU) which is activated by the beacon receivers (IRE) and is connected to the transformer (ÜU), the control device (STU) of the sub-station (U) controlling the receiving device and the transmitting device (EU, SU) in dependence on the normal transmit signals of the main station.

2. Arrangement according to Claim 1, characterized in that the transmission line (ÜL) has three line wires (A, B, C).

3. Arrangement according to Claim 1 or 2, characterized in that, in the case of alternating dialog traffic, the data blocks are transmitted in HDLC protocols with the NRZI mode, a signal change being effected after six transmitter clock pulses and a switch-over from transmitting to receiving occurring, in that for this purpose each substation (U) has in the control device (STU) a retriggerable delay element (MF1) having a delay (t1) which is equal to or greater than the time of seven transmitter clock pulses, and in that connected downstream of the retriggerable delay element (MF1) is a second delay element (MF2) which, according to its delay (t2), disables the receiving device (EU) of the substation (U) and enables the transmitting device (SU) of the substation (U).

4. Arrangement according to Claim 1 or 2, characterized in that, in the case of simultaneous dialogue traffic, the main station (H) transmits with a given mark-to-space ratio, switching to reception between the transmit pulses, in that each substation (U) derives its transmit signals from the transmit signal of the main station (H), the substation (U) transmitting in a time-delayed or phase-shifted manner between the transmit pulses of the main station, and in that for this purpose each substation (U) has in the control device (STU) an astable multivibrator (ASU) and a data block end detection device (BE), which control the transmitting device (SU) of the substation (U) via a logic gate.

## Revendications

1. Dispositif pour un système d'acheminement de trafic et de transmission d'informations servant à réaliser la transmission bidirectionnelle d'informations par fil sous la forme de blocs de données entre un poste principal qui est formé par un appareil de commande de balise, et plusieurs postes secondaires comportant chacun un émetteur et un récepteur de balise qui émettent les informations au moyen d'ondes électromagnétiques en direction d'unités de réception/d'émission, dont la position varie, d'appareils installés sur des véhicules et reçoivent ces informations à partir de ces unités, le trafic de dialogue entre le poste principal et le poste secondaire s'effectuant soit d'une manière successive et alternée, soit simultanément, caractérisé par le fait que dans chaque poste principal (H) il est prévu un dispositif d'émission et un dispositif de réception (SH, EH), qui sont raccordés à un translateur (ÜH) raccordé à une ligne de transmission (ÜL), un dispositif de commande (STH), qui est relié, d'une part, aux dispositifs d'émission et de réception (SH, EH), et, d'autre part, à un calculateur pilote (LR), et un dispositif (SVH) d'alimentation en courant à distance pour les postes secondaires (U1 à Un),

que le poste principal (H) est relié à plusieurs postes secondaires (U1 à Un) par l'intermédiaire de lignes respectives de transmission (ÜL1 à ÜLn) possédant un nombre réduit de conducteurs, qui servent aussi bien pour la transmission d'informations que pour l'alimentation en courant à distance, que chaque poste secondaire (U1 à Un) possède un dispositif d'alimentation en courant (SVU) et un translateur (ÜU), qui sont raccordés à la ligne de transmission (ÜL),

qu'en aval du translateur (ÜU) du poste secondaire (U) est branché un dispositif de réception (EU), dont la sortie est reliée à un dispositif de commande (STU) du poste secondaire (U) et de l'émetteur de balise (IRS), et

que le poste secondaire (U) possède un dispositif d'émission (SU), qui est chargé par les récepteurs de balises (IR1) et est relié au translateur (ÜU), le dispositif de commande (STU) du poste secondaire (U) commandant le dispositif d'émission et le dispositif de réception (EU, SU) en fonction des signaux normaux d'émission du poste principal.

2. Dispositif suivant la revendication 1, caractérisé par le fait que la ligne de transmission (ÜL) comporte trois conducteurs (A, B, C).

3. Dispositif suivant la revendication 1 ou 2, caractérisé par le fait

que dans le cas d'un trafic de dialogue alterné, les blocs de données sont transmis selon le protocole HDLC avec le type de fonctionnement NRZI, auquel cas un changement de signal intervient au bout de six impulsions de cadence d'émission et une commutation est exécutée depuis l'émission sur la réception,

qu'à cet effet, chaque poste secondaire (U) possède, dans le dispositif de commande (STU), un circuit de retardement redéclenchable (MF1) produisant un retard (t1) égal ou supérieur à la durée de six impulsions de cadence d'émission, et qu'en aval du circuit de retardement redéclenchable (MF1) est branché un second circuit de retardement (MF2), qui bloque le dispositif de réception (EU) du poste secondaire (U) et libère le dispositif d'émission (SU) du poste secondaire (U), pendant une durée correspondant au retard (t2) qu'il produit.

4. Dispositif selon la revendication 1 ou 2, caractérisé par le fait que dans le cas d'un trafic de dialogue simultané, le poste principal (H) émet avec un rapport déterminé impulsion/pause entre impulsions, ce poste étant branché sur la réception entre les impulsions d'émission, que chaque poste secondaire (U) tire ses signaux d'émission du signal d'émission du poste principal (H), le poste secondaire (U) émettant avec un retard ou un déphasage entre les impulsions d'émission du poste principal, et qu'à cet effet chaque poste secondaire (U) comporte, dans le dispositif de commande (STU), un étage à bascule astable (ASU) et un dispositif (BE) d'identification de la fin des blocs de données, cet étage et ce dispositif commandant le dispositif d'émission (SU) du poste secondaire (U) par l'intermédiaire d'un circuit combinatoire logique.

FIG 1

FIG 2

EP 0 218 046 B1

## FIG 3

## FIG 4

# FIG 5

EP 0 218 046 B1

**FIG 6**

U

**FIG 7**